# EUROPEAN PATENT APPLICATION

(11) **EP 3 985 569 A1**
(43) Date of publication of application: **20.04.2022**
(21) Application number: 21193225.6
(22) Date of filing: 26.08.2021
(51) Int. Cl.: G06N 3/04, G06N 3/08

(54) **INFORMATION PROCESSING PROGRAM, INFORMATION PROCESSING METHOD, AND INFORMATION PROCESSING DEVICE**

(30) Priority: 16.10.2020 JP 2020174631
(71) Applicant: FUJITSU LIMITED, Kanagawa 211-8588 (JP)
(72) Inventor: Shishido, Katsunari, Kanagawa, 211-8588 (JP)
(74) Representative: Hoffmann Eitle

(57) **Abstract**

The present invention relates to a non-transitory computer-readable recording medium storing an information processing program for causing a computer to execute processing. In an example, the processing includes: acquiring structured data that includes a plurality of pieces of data that indicates a value of a certain attribute; and generating training data used when a model that detects invalid structured data is learned, when the number of pieces of data that has the same attribute value in the acquired structured data is larger than a predetermined number, by processing the structured data so that the number of pieces of data that has the same attribute value becomes equal to the predetermined number.

## Description

### FIELD

The embodiment discussed herein is related to an information processing program, an information processing method, and an information processing device.

### BACKGROUND

Typically, there is a technique for creating a model that determines whether or not input query data is valid on the basis of training data through machine learning. On the other hand, an evasion attack attempts to make a model wrongly determine that invalid query data is normal by inputting the invalid query data that has been processed with reference to normal query data into the model.

As related art, for example, there is a technique for processing auxiliary training data created on the basis of training data generated by Gardened neural network engine with a neural network and generating a first output dataset and a second output dataset. Furthermore, for example, there is a technique for performing additional learning using a sample generated by a generation model representing training data using a learned model and an adversarial sample that triggers wrong classification and generating an update model. Furthermore, for example, there is a technique for converting raw log data into structured log data.

Examples of the related art include U.S. Patent Application Publication No. 2019/0188562, International Publication Pamphlet No. WO 2019/207770, and U.S. Patent Application Publication No. 2016/0085792.

### SUMMARY

### TECHNICAL PROBLEM

However, in the related art, it is difficult to obtain training data that makes it possible to learn a model that accurately determines whether or not query data is normal. For example, even if processed training data corresponding to a case where an evasion attack is performed is created, it is difficult to learn a model that accurately determines that invalid query data is abnormal.

In one aspect, an object of the present embodiment is to obtain training data that makes it possible to learn a model that accurately determines whether or not query data is normal.

### SOLUTION TO PROBLEM

According to an aspect of the embodiments, there is provided a non-transitory computer-readable recording medium storing an information processing program for causing a computer to execute processing. In an example, the processing includes: acquiring structured data that includes a plurality of pieces of data that indicates a value of a certain attribute; and generating training data used when a model that detects invalid structured data is learned, when the number of pieces of data that has the same attribute value in the acquired structured data is larger than a predetermined number, by processing the structured data so that the number of pieces of data that has the same attribute value becomes equal to the predetermined number.

The object and advantages of the invention will be realized and attained by means of the elements and combinations particularly pointed out in the claims.

It is to be understood that both the foregoing general description and the following detailed description are exemplary and explanatory and are not restrictive of the invention.

### ADVANTAGEOUS EFFECTS OF INVENTION

According to one aspect, it is possible to obtain training data that makes it possible to learn a model that accurately determines whether or not query data is normal.

### BRIEF DESCRIPTION OF DRAWINGS

FIG. 1 is an explanatory diagram illustrating an example of an information processing method according to an embodiment;
FIG. 2 is an explanatory diagram illustrating an example of an abnormality detection system 200;
FIG. 3 is a block diagram illustrating a hardware configuration example of an information processing device 100;
FIG. 4 is a block diagram illustrating a functional configuration example of the information processing device 100;
FIG. 5 is an explanatory diagram illustrating an example of structured data;
FIG. 6 is an explanatory diagram illustrating an example of an evasion attack;
FIG. 7 is an explanatory diagram illustrating an example of learning and using a model;
FIG. 8 is an explanatory diagram illustrating another example of learning and using a model;
FIG. 9 is an explanatory diagram illustrating a first specific example for processing structured data 900;
FIG. 10 is an explanatory diagram illustrating a second specific example for processing structured data 1000;
FIG. 11 is an explanatory diagram illustrating a third specific example for processing structured data 1100;
FIG. 12 is an explanatory diagram illustrating a fourth specific example for processing structured data 1200;
FIG. 13 is an explanatory diagram illustrating a fifth specific example for processing structured data 1300;
FIG. 14 is an explanatory diagram illustrating an example of an effect of the information processing device 100; and
FIG. 15 is a flowchart illustrating an example of a processing procedure.

### DESCRIPTION OF EMBODIMENTS

Hereinafter, embodiments of an information processing program, an information processing method, and an information processing device will be described in detail with reference to the drawings.

### (Example of Information Processing Method According to Embodiment)

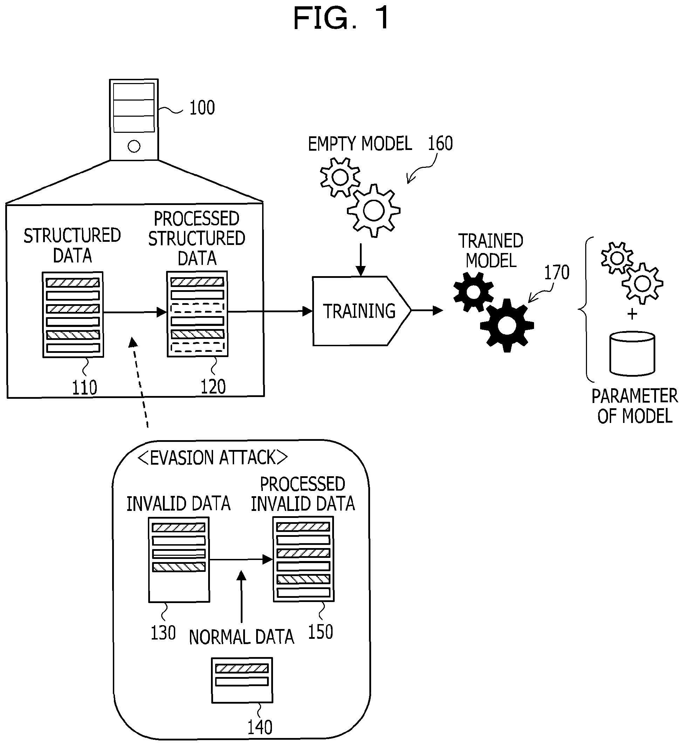

FIG. 1 is an explanatory diagram illustrating an example of an information processing method according to an embodiment. An information processing device 100 is a computer that generates training data used when a predetermined model is learned through machine learning. The predetermined model is, for example, a model used to detect invalid query data. The invalid query data is, for example, created by an evasion attack.

The evasion attack is an attack that processes the invalid query data with reference to normal query data and inputs the processed invalid query data into a model so as to make the model wrongly determine that the processed invalid query data is normal. The evasion attack processes the invalid query data, for example, by inserting a part of normal query data into the invalid query data. For example, a situation is considered in which the evasion attack causes the model to wrongly determine that log data of attack communication is log data of normal communication. Furthermore, for example, a situation is considered in which the evasion attack is performed so as to wrongly determine spam mail data as normal mail data.

Therefore, it is desired to learn a model that can accurately determine whether or not query data is normal. Specifically, for example, it is desired to learn a model that can correctly determine that the invalid query data created by the evasion attack is abnormal.

In the following description, there is a case where a probability that invalid query data created by an evasion attack is correctly determined as abnormal is referred to as an "attack resistance". For example, a degree of the probability that the invalid query data created by the evasion attack is correctly determined as abnormal is defined as a degree of the attack resistance. Furthermore, as an evaluation index of the attack resistance, an attack detection rate that represents a rate of query data that is correctly determined as abnormal among the query data created by the evasion attack is defined.

However, typically, it is difficult to learn the model that can accurately determine whether or not query data is normal. For example, it is difficult to obtain training data that makes it possible to learn the model that accurately determines whether or not the query data is normal, and it is difficult to learn the model that can accurately determine whether or not the query data is normal.

Here, for example, a method 1 is considered that learns a model using normal training data and training data, to which noise is added, referred to as an adversarial sample. The method 1 is considered, for example, as one kind of methods referred to as Adversarial Training. With the method 1, it is difficult to learn the model that can accurately determine whether or not query data is normal. For example, with the method 1, it is difficult to reduce the probability that the invalid query data created by the evasion attack is wrongly determined as normal, and the attack detection rate is relatively deteriorated.

Furthermore, for example, a method 2 is considered that processes normal training data, creates new training data coping with a case where an evasion attack is performed, and learns a model using the normal training data and the new training data. The method 2 is considered, for example, as one kind of methods referred to as Adversarial Training. The method 2 attempts to improve the probability that the invalid query data created by the evasion attack is determined as abnormal. Regarding a specific example of the method 2, for example, the following reference 1 can be referred.

Reference 1: Goodfellow, Ian J., Jonathon Shlens, and Christian Szegedy, "Explaining and harnessing adversarial examples." arXiv preprint arXiv: 1412.6572 (2014).

However, even with the method 2, it is difficult to create the model that can accurately determine whether or not the query data is normal. For example, with the method 2, it is difficult to reduce the probability that the invalid query data created by the evasion attack is wrongly determined as normal. Specifically, for example, the method 2 has a problem in that the attack detection rate is improved to only around 40%. In this way, even if the new training data corresponding to a case where the evasion attack is performed is created, it is difficult to learn the model that accurately determines that the invalid query data is abnormal.

Therefore, in the present embodiment, an information processing method will be described that can generate training data that makes it possible to learn a model that accurately determines whether or not query data is normal.

(1-1) The information processing device 100 acquires structured data 110. The structured data 110 includes, for example, a plurality of pieces of data indicating a predetermined attribute value. Furthermore, the structured data 110 may include, for example, a plurality of pieces of data indicating a combination of the plurality of attribute values. The structured data 110 is a base of training data that is used when a model that detects invalid structured data is learned. The attribute is, for example, information regarding communication. The attribute is, for example, a command issued during communication, an option to the command, or the like. In the example in FIG. 1, each rectangle in the structured data 110 represents data indicating a value of a predetermined attribute.

(1-2) The information processing device 100 determines whether or not the number of pieces of data having the same attribute value in the acquired structured data 110 is larger than a predetermined number. The predetermined number is, for example, one. In the example in FIG. 1, a plurality of rectangles having the same pattern in the structured data 110 represents a plurality of pieces of data having the same attribute value. In the example in FIG. 1, the information processing device 100 calculates the number of pieces of data having the same attribute value in the acquired structured data 110 and determines whether or not the calculated number is larger than the predetermined number.

When the number of pieces of data having the same attribute value in the acquired structured data 110 is larger than the predetermined number, the information processing device 100 processes the structured data 110 so that the number of pieces of data having the same attribute value becomes equal to the predetermined number. The information processing device 100 treats processed structured data 120 as training data that is used when a model for detecting invalid structured data is learned. The training data is associated with, for example, correct answer data. The correct answer data indicates a correct answer indicating whether or not the structured data 110 is normal and indicates a correct answer for data output from the model. In the example in FIG. 1, the information processing device 100, for example, processes the structured data 110 to be in a state where an effect of the evasion attack is removed in consideration of the nature of the evasion attack and treats the processed data as the training data.

In the evasion attack, for example, invalid data 130 is processed by inserting data included in normal data 140 therein. Therefore, processed invalid data 150 has the nature that is likely to include a plurality of pieces of data having the same attribute value. Therefore, specifically, for example, the information processing device 100 processes the structured data 110 by reducing the number of pieces of data having the same attribute value, in consideration of the nature described above, so that the number of pieces of data having the same attribute value in the structured data 110 becomes equal to the predetermined number.

(1-3) The information processing device 100 learns a model that detects invalid structured data on the basis of generated training data. In the example in FIG. 1, the information processing device 100 includes, for example, an empty model 160. The empty model 160 is a model to which no parameter is set. The information processing device 100 inputs, for example, the processed structured data 120 into the empty model 160. For example, the information processing device 100 adjusts the parameter of the empty model 160 so that data output from the empty model 160 in response to the input matches the correct answer data and generates a trained model 170. The correct answer data is associated with training data. The trained model 170 is expressed, for example, by a combination of the empty model 160 and the adjusted parameter.

Thereafter, for example, the information processing device 100 may acquire query data and determine whether or not the acquired query data is normal using the trained model 170. Furthermore, for example, the information processing device 100 may transmit the trained model 170 to another computer and make the another computer be able to determine whether or not the query data is normal.

As a result, the information processing device 100 can generate the training data in consideration of the nature of the evasion attack. Therefore, the information processing device 100 can make it easier to learn a model having a relatively high attack detection rate on the basis of the training data. Then, the information processing device 100 can learn the model having a relatively high attack detection rate. Furthermore, the information processing device 100 can accurately determine whether or not the query data is normal.

Here, a case has been described where the information processing device 100 calculates the number of pieces of data having the same attribute value in the acquired structured data 110 and processes the structured data 110 if the calculated number is larger than the predetermined number. However, the embodiment is not limited to this. For example, there may be a case where the information processing device 100 processes the structured data 110 without calculating the number of pieces of data having the same attribute value in the acquired structured data 110.

Specifically, for example, the information processing device 100 sequentially refers to the data included in the structured data 110, finds data having the same attribute value, counts the number of pieces of data having the same attribute value, and detects that the number of pieces of data having the same attribute value reaches the predetermined number. Then, after the detection, each time when finding the data having the same attribute value, the information processing device 100 deletes the found data from the structured data 110 so as to process the structured data 110.

Here, a case has been described where the information processing device 100 learns the model that detects invalid structured data on the basis of the generated training data. However, the embodiment is not limited to this. For example, there may be a case where the information processing device 100 transmits the generated training data to another computer and makes the another computer be able to learn the model that detects the invalid structured data.

Here, a case has been described where the information processing device 100 acquires one piece of structured data 110. However, the embodiment is not limited to this. For example, the information processing device 100 may acquire the plurality of pieces of structured data 110. In this case, the information processing device 100 processes each piece of the structured data 110 and generates training data.

### (Example of Abnormality Detection System 200)

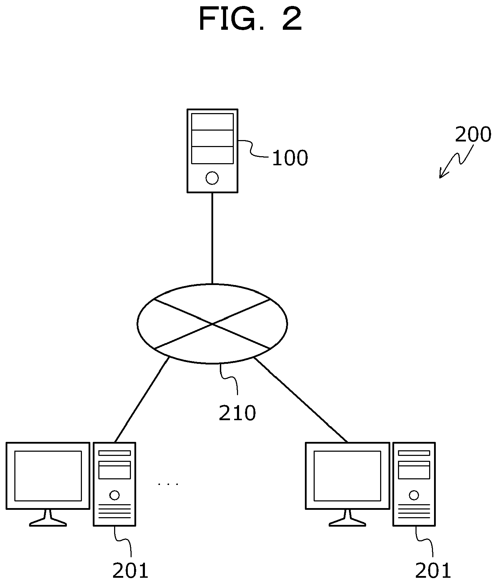

Next, an example of an abnormality detection system 200 to which the information processing device 100 illustrated in FIG. 1 is applied will be described with reference to FIG. 2.

FIG. 2 is an explanatory diagram illustrating an example of the abnormality detection system 200. In FIG. 2, the abnormality detection system 200 includes the information processing device 100 and a client device 201.

In the abnormality detection system 200, the information processing device 100 and the client device 201 are connected via a wired or wireless network 210. The network 210 is, for example, a local area network (LAN), a wide area network (WAN), the Internet, or the like.

The information processing device 100 acquires a structured data group. The structured data corresponds to, for example, log data of communication performed by the client device 201, mail data received by the client device 201, or the like. The structured data may be associated with, for example, correct answer data. The correct answer data indicates a correct answer indicating whether or not the structured data is normal. The correct answer data indicates a correct answer of the data output from the model that indicates a result of the determination regarding whether or not the structured data is normal. The information processing device 100, for example, acquires the structured data group by collecting the structured data from the client device 201.

The information processing device 100 acquires a training data group on the basis of the structured data group. For example, the information processing device 100 processes each piece of the structured data of the structured data group and treats each piece of the processed structured data as training data. The training data is associated with, for example, the correct answer data. Specifically, for example, if a plurality of pieces of data having the same content is included in the structured data, the information processing device 100 processes the structured data by deleting the data until the number of pieces of data becomes equal to a predetermined number. Moreover, for example, the information processing device 100 may treat each piece of the structured data before being processed as the training data. The training data is associated with, for example, the correct answer data.

The information processing device 100 learns a model that detects the invalid structured data on the basis of each processed structured data. A learning method is, for example, back propagation or the like. The information processing device 100 learns the model that detects the invalid structured data, for example, using the processed structured data, which is treated as the training data, as an input. Specifically, for example, the information processing device 100 adjusts a parameter of the model so that data output from the model to which the structured data treated as the training data is input matches the correct answer data corresponding to the training data.

The information processing device 100 acquires query data. The query data is structured data. The query data is target structured data of an inquiry whether or not it is normal. The query data corresponds to, for example, log data of communication performed by the client device 201 or mail data received by the client device 201 or the like. The information processing device 100 acquires the query data, for example, by receiving the query data from the client device 201.

The information processing device 100 determines whether or not the acquired query data is normal using the learned model. The information processing device 100, for example, processes the acquired query data. Specifically, for example, if a plurality of pieces of data having the same content is included in the query data, the information processing device 100 processes the query data by deleting the data until the number of pieces of data becomes equal to a predetermined number. The information processing device 100 inputs, for example, the processed query data into the learned model. The information processing device 100 acquires, for example, an attack certainty output from the model in response to the input. Here, the attack certainty is an index value indicating a degree of a probability that query data is abnormal.

The information processing device 100 determines whether or not the query data is normal, for example, on the basis of the attack certainty. Specifically, for example, the information processing device 100 determines that the query data is abnormal if the attack certainty is equal to or more than a threshold. On the other hand, specifically, for example, if the attack certainty is less than the threshold, the information processing device 100 determines that the query data is normal. The information processing device 100, for example, transmits the determined result to the client device 201 that is a transmission source of the query data. The information processing device 100 is, for example, a server, a personal computer (PC), or the like.

The client device 201 is a computer that transmits structured data to be the base of training data or query data to the information processing device 100. For example, when communicating with another computer, the client device 201 generates log data of the communication, and transmits the generated log data to the information processing device 100 as the structured data to be the base of the training data or the query data. The another computer is, for example, another client device 201. The another computer may be, for example, a device different from the another client device 201. The client device 201 may transmit, for example, mail data received from the another computer to the information processing device 100 as the structured data to be the base of the training data or the query data.

The client device 201 receives the result of the determination regarding whether or not the query data is normal from the information processing device 100. The client device 201 outputs the result of the determination regarding whether or not the query data is normal so that a user of the client device 201 can refer to the result. The client device 201 is, for example, a PC, a tablet terminal, a smartphone, a wearable terminal, an Internet of Things (IoT), or the like.

The abnormality detection system 200 described above is used to prevent the user of the client device 201 from using invalid data created by an evasion attack and suffering a disadvantage, for example.

Specifically, for example, the abnormality detection system 200 treats the log data of the communication performed by the client device 201 as query data. The abnormality detection system 200 detects log data of attack communication by determining whether or not the log data, treated as the query data, of the communication performed by the client device 201 is normal. Then, the abnormality detection system 200 controls the client device 201 so that the user of the client device 201 can grasp the log data of the attack communication. Accordingly, the abnormality detection system 200 reduces the disadvantage for the user of the client device 201.

Specifically, for example, the abnormality detection system 200 treats the mail data received by the client device 201 as query data and determines whether or not the mail data received by the client device 201 is normal so as to detect spam mail data. Then, the abnormality detection system 200 controls the client device 201 so that the user of the client device 201 can grasp the spam mail data. Accordingly, the abnormality detection system 200 reduces the disadvantage for the user of the client device 201.

Specifically, for example, the abnormality detection system 200 treats feature data representing features of a portable executable (PE) file of software included in the client device 201 as query data. The abnormality detection system 200 detects software to be malware by determining whether or not the PE file is normal. Then, the abnormality detection system 200 controls the client device 201 so that the user of the client device 201 can grasp the software to be malware. Accordingly, the abnormality detection system 200 reduces the disadvantage for the user of the client device 201.

Here, a case has been described where the information processing device 100 collects the structured data from the client device 201. However, the embodiment is not limited to this. For example, there may be a case where the information processing device 100 receives an input of structured data on the basis of an operation input by the user of the information processing device 100. Furthermore, for example, there may be a case where the information processing device 100 reads structured data from a detachable recording medium.

Here, a case has been described where the information processing device 100 learns the model that detects the invalid structured data on the basis of the structured data. However, the embodiment is not limited to this. For example, there may be a case where the information processing device 100 transmits the processed structured data to another computer and makes the another computer be able to learn the model that detects the invalid structured data.

Here, a case has been described where the information processing device 100 acquires query data and determines whether or not the query data is normal using the learned model. However, the embodiment is not limited to this. For example, there may be a case where the information processing device 100 transmits the learned model to another computer. In this case, the another computer acquires the query data and determines whether or not the query data is normal using the received model.

Here, a case where the information processing device 100 and the client device 201 are different devices has been described. However, the embodiment is not limited thereto. For example, there may be a case where the information processing device 100 has a function as the client device 201. In this case, the abnormality detection system 200 does not need to include the client device 201.

### (Hardware Configuration Example of Information Processing Device 100)

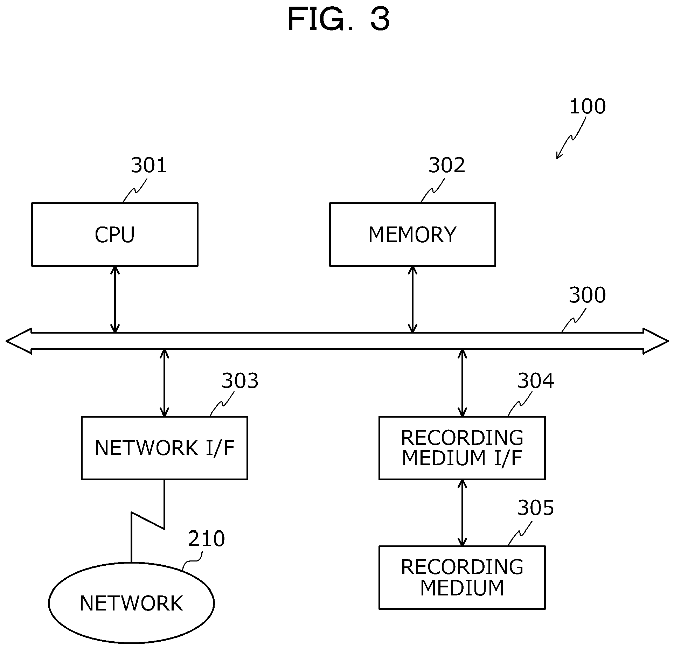

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network interface (I/F) 303, a recording medium I/F 304, and a recording medium 305. Furthermore, these components are connected to each other by a bus 300.

Here, the CPU 301 performs overall control of the information processing device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is connected to the network 210 through a communication line, and is connected to another computer through the network 210. Then, the network I/F 303 manages an interface between the network 210 and an inside, and controls inputs and outputs of data to and from the another computer. The network I/F 303 is, for example, a modem, a LAN adapter, and the like.

The recording medium I/F 304 controls reading and writing of data to and from the recording medium 305 under the control of the CPU 301. The recording medium I/F 304 is, for example, a disk drive, a solid state drive (SSD), a universal serial bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be attachable to and detachable from the information processing device 100.

The information processing device 100 may include, for example, a keyboard, a mouse, a display, a printer, a scanner, a microphone, a speaker, or the like in addition to the components described above. Furthermore, the information processing device 100 may include a plurality of the recording medium I/Fs 304 and the recording media 305. Furthermore, the information processing device 100 does not need to include the recording medium I/F 304 and the recording medium 305.

### (Hardware Configuration Example of Client Device 201)

Since the hardware configuration example of the client device 201 is similar to the hardware configuration example of the information processing device 100 illustrated in FIG. 3, the description thereof is omitted.

### (Functional Configuration Example of Information Processing Device 100)

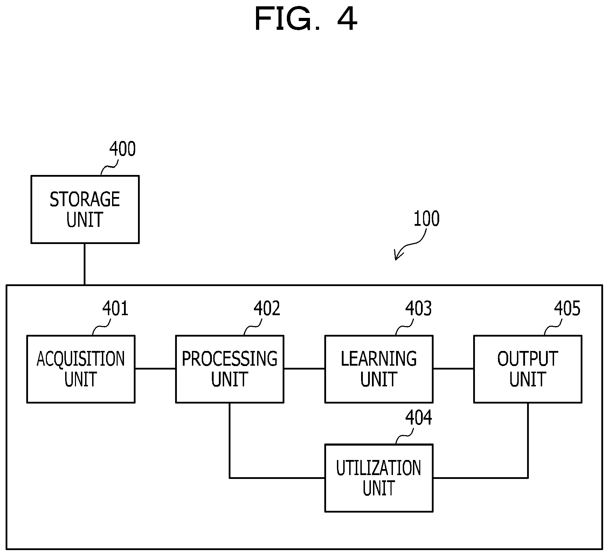

Next, a functional configuration example of the information processing device 100 will be described with reference to FIG. 4.

FIG. 4 is a block diagram illustrating the functional configuration example of the information processing device 100. The information processing device 100 includes a storage unit 400, an acquisition unit 401, a processing unit 402, a learning unit 403, a utilization unit 404, and an output unit 405.

The storage unit 400 is implemented by a storage area such as the memory 302 or the recording medium 305 illustrated in FIG. 3, for example. Hereinafter, a case where the storage unit 400 is included in the information processing device 100 will be described. However, the embodiment is not limited to this. For example, the storage unit 400 may be included in a device different from the information processing device 100, and content stored in the storage unit 400 may be able to be referred to by the information processing device 100.

The acquisition unit 401 to the output unit 405 function as examples of a control unit. For example, specifically, the acquisition unit 401 to the output unit 405 implement functions thereof by causing the CPU 301 to execute a program stored in the storage area such as the memory 302 or the recording medium 305 illustrated in FIG. 3 or by the network I/F 303. A processing result of each functional unit is stored in, for example, the storage area such as the memory 302 or the recording medium 305 illustrated in FIG. 3.

The storage unit 400 stores various types of information referred or updated in the processing of each functional unit. The storage unit 400 stores structured data. The structured data includes, for example, a plurality of pieces of data indicating a predetermined attribute value. Furthermore, the structured data may include, for example, a plurality of pieces of data indicating a combination of the plurality of attribute values. The structured data is a base of training data that is used when a model that detects invalid structured data is learned. The structured data is, for example, data having a concept of rows and columns. The structured data corresponds to, for example, log data of communication, mail data, a PE file, or the like. Data forming the structured data indicates, for example, a single processing relating to communication.

The training data indicates an input x to a model. The training data is associated with, for example, correct answer data. The correct answer data corresponds to a correct answer of an output y from the model and indicates a correct answer regarding whether or not the structured data is normal. The attribute is, for example, information regarding communication. Specifically, for example, the attribute is a command issued during communication, an option to the command, or the like. The attribute may be, for example, information regarding mails. The attribute is, specifically, for example, a sender, an address, a header, or the like. The attribute is, for example, information regarding software. Specifically, for example, the attribute is information representing features of a PE file of software. An attribute value is a feature amount of the attribute.

The storage unit 400 stores query data. The query data is target data of an inquiry regarding whether or not the data is normal. The query data is, for example, structured data. The query data corresponds to, for example, log data of communication, mail data, a PE file, or the like. The query data may be invalid query data created by an attacker through an evasion attack. The structured data includes, for example, a plurality of pieces of data indicating a predetermined attribute value. Furthermore, the structured data may include, for example, a plurality of pieces of data indicating a combination of the plurality of attribute values. Data forming the structured data indicates, for example, a single processing relating to communication.

The storage unit 400 stores a model to which training data or query data is input. The model is learned to detect abnormal structured data. The model is implemented, for example, by a neural network, a logistic regression model, a support vector machine (SVM), a tree structure model, or the like. Specifically, for example, the storage unit 400 stores a parameter of a model. The model is learned by the learning unit 403, for example.

The storage unit 400 stores a predetermined number. The predetermined number defines an upper limit set for the number of pieces of data having the same value of a certain attribute in the structured data. The predetermined number may be different for each attribute. The predetermined number may be set on the basis of a feature of the attribute value. The predetermined number may be different for each attribute value on the basis of the feature of the attribute value. The predetermined number may be set in common for each of values that may be set to the attributes. The predetermined number is, for example, one.

The acquisition unit 401 acquires various types of information to be used for the processing of each functional unit. The acquisition unit 401 stores the acquired various types of information in the storage unit 400 or outputs the acquired various types of information to each functional unit. Furthermore, the acquisition unit 401 may output the various types of information stored in the storage unit 400 to each functional unit. The acquisition unit 401 acquires various types of information, for example, on the basis of an operation input of the user of the information processing device 100. The acquisition unit 401 may receive various types of information from a device different from the information processing device 100, for example.

The acquisition unit 401 acquires structured data. The acquisition unit 401 acquires the structured data by collecting the structured data from the client device 201, for example, at a predetermined timing. The predetermined timing is set by a user of the information processing device 100. The predetermined timing is, for example, at certain time intervals. The predetermined timing may be a timing when a predetermined operation input is made by the user of the information processing device 100.

The acquisition unit 401 may acquire a sample of normal structured data. The normal structured data is, for example, structured data in a state where an evasion attack is not performed. The normal structured data includes, for example, a plurality of pieces of data indicating a predetermined attribute value. Furthermore, the normal structured data may include, for example, a plurality of pieces of data indicating a combination of the plurality of attribute values. The acquisition unit 401 acquires, for example, the normal structured data by receiving the normal structured data from the client device 201.

The acquisition unit 401 acquires query data. The acquisition unit 401 acquires, for example, the query data by receiving the query data from the client device 201.

The acquisition unit 401 may accept a start trigger to start processing of any one of the functional units. The start trigger is, for example, a predetermined operation input by the user of the information processing device 100. The start trigger may be, for example, receipt of predetermined information from another computer. The start trigger may be, for example, output of predetermined information by any one of the functional units.

For example, the acquisition unit 401 may accept the acquisition of the structured data to be the base of the training data as a start trigger to start processing of the processing unit 402 and the learning unit 403. For example, the acquisition unit 401 may accept the acquisition of the query data as a start trigger to start processing of the processing unit 402 and the utilization unit 404.

The processing unit 402 processes the acquired structured data so as to generate training data. For example, if the number of pieces of data having the same attribute value in the structured data is larger than the predetermined number, the processing unit 402 processes the structured data so that the number of pieces of data having the same attribute value becomes equal to the predetermined number. The training data is used when the model that detects invalid structured data is learned. The training data is, for example, used by the learning unit 403.

Specifically, for example, the processing unit 402 specifies the number of pieces of data having the same attribute value in the structured data. Then, specifically, for example, if the specified number is larger than the predetermined number, the processing unit 402 generates training data by deleting the data from the structured data so that the number of pieces of data having the same attribute value becomes equal to the predetermined number.

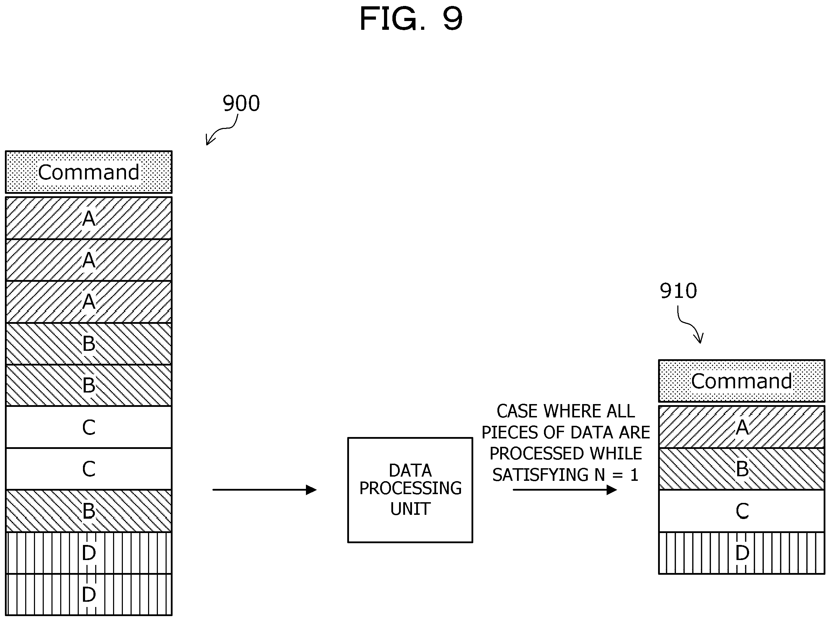

More specifically, for example, as illustrated in FIG. 9 later, the processing unit 402 generates the training data by processing the structured data. As a result, the processing unit 402 can obtain the training data that can make it easier to learn the model that can accurately determine that invalid query data is abnormal.

For example, if the number of pieces of data having the same combination of the plurality of attribute values in the structured data is larger than the predetermined number, the processing unit 402 may process the structured data so that the number of pieces of data having the same combination becomes equal to the predetermined number.

Specifically, for example, the processing unit 402 specifies the number of pieces of data having the same combination of the plurality of attribute values in the structured data. Then, specifically, for example, if the specified number is larger than the predetermined number, the processing unit 402 generates training data by deleting the data from the structured data so that the number of pieces of data having the same combination becomes equal to the predetermined number.

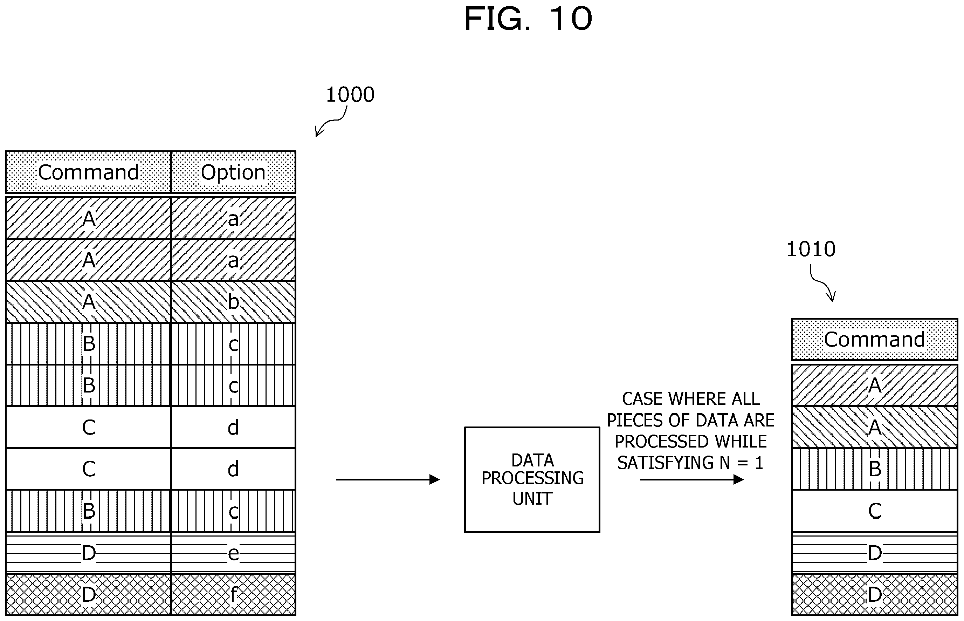

More specifically, for example, as illustrated in FIG. 10 later, the processing unit 402 generates the training data by processing the structured data. As a result, the processing unit 402 can obtain the training data that can be appropriately processed according to the feature of the structured data and can make it easier to learn the model that can accurately determine that invalid query data is abnormal.

For example, if the number of continuously appearing pieces of data having the same combination in the structured data is larger than the predetermined number, the processing unit 402 may process the structured data so that the number of continuously appearing pieces of data having the same combination becomes equal to the predetermined number.

Specifically, for example, the processing unit 402 specifies the number of continuously appearing pieces of data having the same combination in the structured data. Then, specifically, for example, if the specified number is larger than the predetermined number, the processing unit 402 generates training data by deleting the data from the structured data so that the number of continuously appearing pieces of data having the same combination becomes equal to the predetermined number.

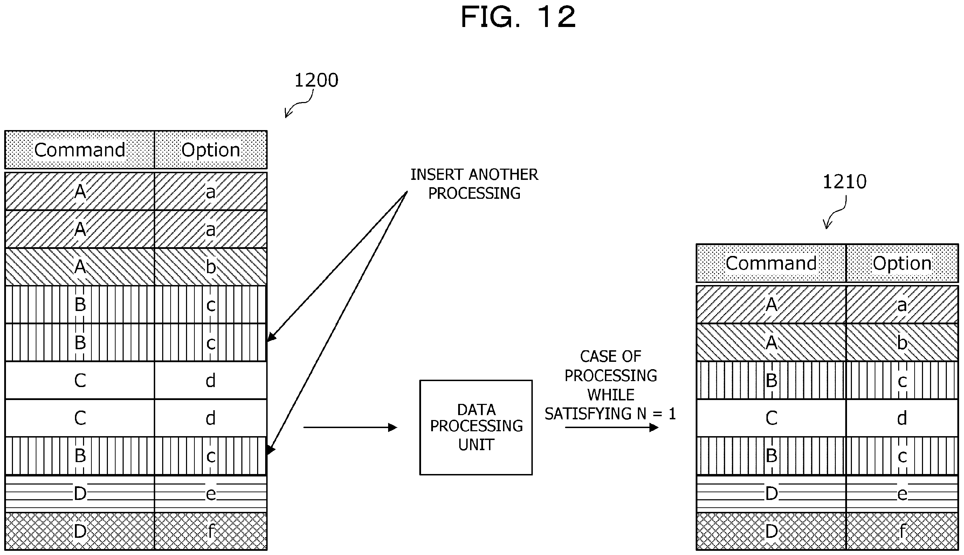

More specifically, for example, as illustrated in FIG. 12 later, the processing unit 402 generates the training data by processing the structured data. As a result, the processing unit 402 can obtain the training data that can be appropriately processed according to the feature of the structured data and can make it easier to learn the model that can accurately determine that invalid query data is abnormal.

For example, if the number of pieces of data having the same value of a first attribute among the plurality of attributes in the structured data is larger than the predetermined number, the processing unit 402 may process the structured data so that the number of pieces of data having the same value of the first attribute becomes equal to the predetermined number.

Specifically, for example, the processing unit 402 specifies the number of pieces of data having the same value of the first attribute in the structured data. Then, specifically, for example, if the specified number is larger than the predetermined number, the processing unit 402 generates training data by deleting the data from the structured data so that the number of pieces of data having the same value of the first attribute becomes equal to the predetermined number.

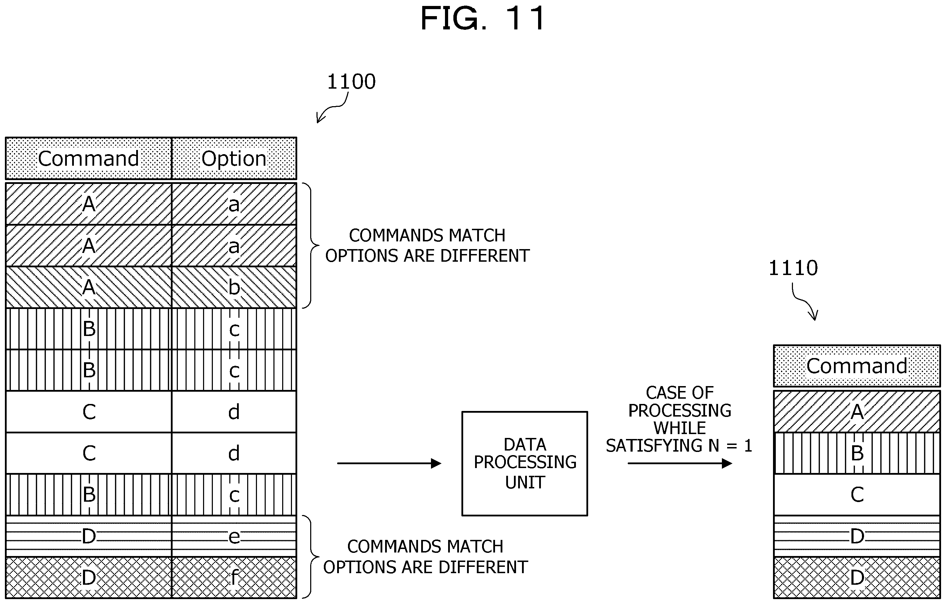

More specifically, for example, as illustrated in FIG. 11 later, the processing unit 402 generates the training data by processing the structured data. As a result, the processing unit 402 can obtain the training data that can be appropriately processed according to the feature of the structured data and can make it easier to learn the model that can accurately determine that invalid query data is abnormal.

For example, if the number of continuously appearing pieces of data having the same value of the first attribute in the structured data is larger than the predetermined number, the processing unit 402 may process the structured data so that the number of continuously appearing pieces of data having the same value of the first attribute becomes equal to the predetermined number.

Specifically, for example, the processing unit 402 specifies the number of continuously appearing pieces of data having the same value of the first attribute among the plurality of attributes in the structured data. Then, specifically, for example, if the specified number is larger than the predetermined number, the processing unit 402 generates training data by deleting the data from the structured data so that the number of continuously appearing pieces of data having the same value of the first attribute becomes equal to the predetermined number.

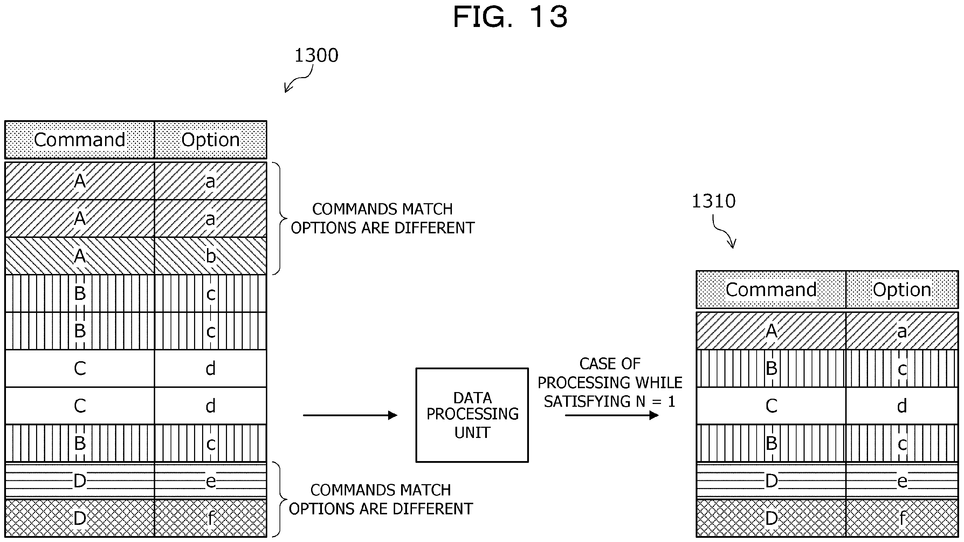

More specifically, for example, as illustrated in FIG. 13 later, the processing unit 402 generates the training data by processing the structured data. As a result, the processing unit 402 can obtain the training data that can be appropriately processed according to the feature of the structured data and can make it easier to learn the model that can accurately determine that invalid query data is abnormal.

By adding any piece of data included in normal second structured data to acquired first structured data, the processing unit 402 may acquire the first structured data to which the data has been added. The first structured data is any one of the structured data acquired by the acquisition unit 401. The second structured data is, for example, any one of the normal structured data acquired by the acquisition unit 401. As a result, the processing unit 402 can increase the number of pieces of structured data to be the base of the training data used when the model is learned and can make it easier to learn the model that can accurately determine that invalid query data is abnormal.

The processing unit 402 generates the training data by processing the first structured data to which the data has been added. A processing method is, for example, similar to any one of the methods for processing the structured data described above. Specifically, for example, the processing method is similar to any one of processing methods illustrated in FIGs. 9 to 13 later. For example, if the number of pieces of data having the same attribute value in the first structured data to which the data has been added is larger than the predetermined number, the processing unit 402 generates training data by processing the first structured data to which the data has been added so that the number of pieces of data having the same attribute value becomes equal to the predetermined number. As a result, the processing unit 402 can obtain the training data that can make it easier to learn the model that can accurately determine that invalid query data is abnormal.

The processing unit 402 processes the acquired query data. A processing method is similar to any one of the methods for processing the structured data described above. Specifically, for example, the processing method is similar to any one of processing methods illustrated in FIGs. 9 to 13 later. For example, if the number of pieces of data having the same attribute value in the query data is larger than the predetermined number, the processing unit 402 processes the query data so that the number of pieces of data having the same attribute value becomes equal to the predetermined number. As a result, the processing unit 402 can process the query data into a format suitable for the learned model.

The learning unit 403 learns the model using the generated training data. A learning method is, for example, back propagation or the like. For example, the learning unit 403 inputs each piece of the training data into the model and adjusts the parameter of the model so that data output from the model becomes correct answer data corresponding to the training data so as to learn the model. The data output from the model is, for example, the attack certainty. As a result, the learning unit 403 makes it possible to use the model that can accurately determine that invalid query data is abnormal.

The utilization unit 404 verifies validity of the acquired query data on the basis of the processed query data using the learned model. The utilization unit 404 inputs, for example, the processed query data into the learned model. Next, for example, the processing unit 402 acquires data output from the model in response to the input. The data output from the model is, for example, the attack certainty. Then, for example, the processing unit 402 determines whether or not the acquired query data is normal on the basis of the acquired data.

Specifically, for example, if the acquired attack certainty is equal to or more than a threshold, the processing unit 402 determines that the acquired query data is abnormal. On the other hand, specifically, for example, if the acquired attack certainty is less than the threshold, the processing unit 402 determines that the acquired query data is normal. As a result, the utilization unit 404 can accurately verify the validity of the query data. For example, the utilization unit 404 can accurately determine whether or not the query data is normal. Specifically, for example, the utilization unit 404 can correctly determine that invalid query data is abnormal.

The output unit 405 outputs a processing result of at least any one of the functional units. An output format is, for example, display on a display, print output to a printer, transmission to an external device by the network I/F 303, or storage in the storage area such as the memory 302 or the recording medium 305. As a result, the output unit 405 makes it possible to notify the user of the information processing device 100 of a processing result of at least any one of the functional units and can improve convenience of the information processing device 100.

The output unit 405 outputs the generated training data. The output unit 405, for example, transmits the training data to another computer. The another computer may be, for example, the client device 201. As a result, the output unit 405 can make the another computer be able to learn the model that can accurately determine that invalid query data is abnormal.

The output unit 405 outputs the learned model. The output unit 405, for example, transmits the learned model to another computer. The another computer may be, for example, the client device 201. As a result, the output unit 405 can make the another computer be able to use the model that can accurately determine that invalid query data is abnormal.

The output unit 405 outputs data output from the model. The output unit 405, for example, transmits the attack certainty output from the model to another computer. The another computer may be, for example, the client device 201. As a result, the output unit 405 can make the another computer be able to refer to the attack certainty and be able to accurately determine whether or not the query data is normal.

The output unit 405 outputs a result of verification regarding the validity of the query data. The output unit 405 transmits, for example, the result of determination regarding whether or not the query data is normal to another computer. The another computer may be, for example, the client device 201. As a result, the output unit 405 can make the another computer be able to use the result of the determination regarding whether or not the query data is normal.

Here, a case has been described where the information processing device 100 includes the learning unit 403. However, the embodiment is not limited to this. For example, there may be a case where the information processing device 100 does not include the learning unit 403. In this case, for example, another computer includes the learning unit 403 and acquires the training data generated by the processing unit 402 from the information processing device 100.

Here, a case has been described where the information processing device 100 includes the utilization unit 404. However, the embodiment is not limited to this. For example, there may be a case where the information processing device 100 does not include the utilization unit 404. In this case, for example, another computer includes the utilization unit 404 and acquires the model learned by the learning unit 403 from the information processing device 100.

### (Example of Operation of Information Processing Device 100)

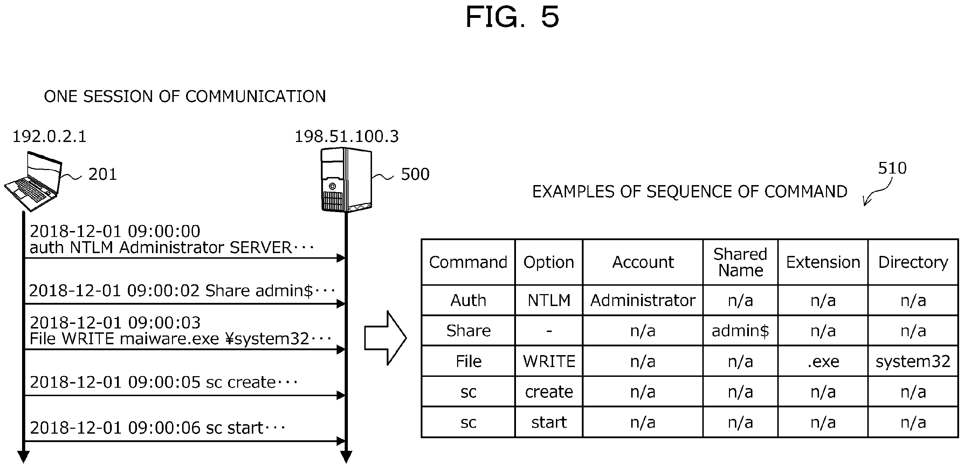

Next, an example of an operation of the information processing device 100 will be described with reference to FIGs. 5 to 8. Specifically, for example, first, an example of structured data acquired by the information processing device 100 will be described with reference to FIG. 5. The structured data is, for example, the base of training data. Alternatively, the structured data is, for example, query data.

FIG. 5 is an explanatory diagram illustrating an example of the structured data. In FIG. 5, it is assumed that the client device 201 determine whether or not log data of communication for one session is normal each time when communicating with another computer 500. The log data of the communication is expressed as the structured data.

Therefore, it is assumed that the client device 201 transmit log data of communication in the past to the information processing device 100 as structured data to be the base of the training data. Furthermore, it is assumed that the client device 201 transmit the log data of the communication to the information processing device 100 as the structured data to be query data each time when communicating with the another computer 500.

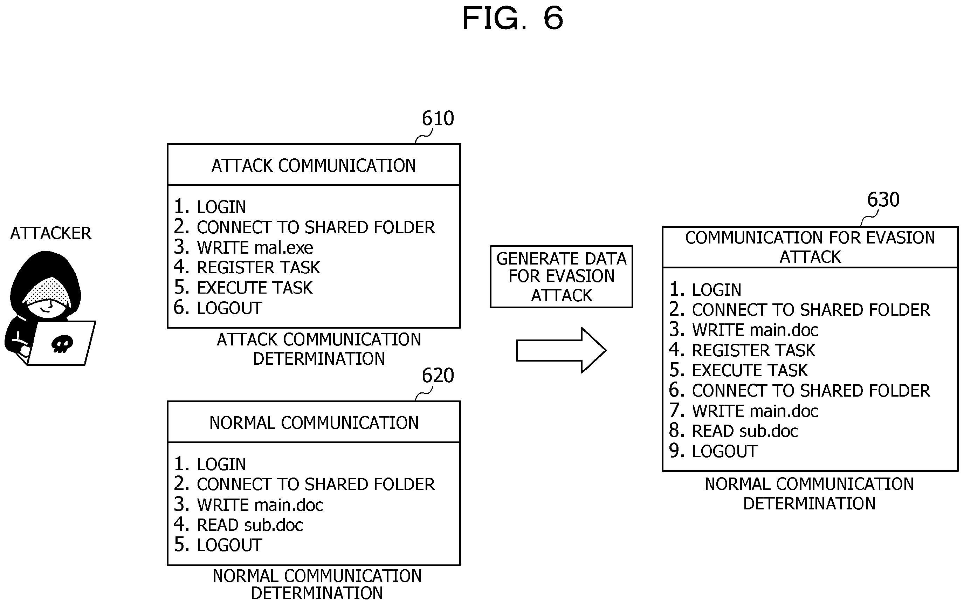

The structured data includes one or more pieces of data indicating a combination of a plurality of attribute values regarding communication. The structured data is, for example, data having a concept of rows and columns. The structured data corresponds to, for example, a table 510. The data indicates a single processing in communication. The data corresponds to, for example, a record of the table 510. The attributes include, for example, a processing name (Command), an option (Option), an account (Account), a Shared Name, an extension (Extension), a directory (Directory), or the like. An attribute value is a feature amount of the attribute. Next, shifting to the description of FIG. 6, and an example of an evasion attack to the structured data will be described.

FIG. 6 is an explanatory diagram illustrating an example of the evasion attack. In FIG. 6, in a case where an attacker performs attack communication with the client device 201 without performing an evasion attack, there is a relatively high probability that the client device 201 determines that the structured data 610 corresponding to the attack communication is the attack communication and is abnormal. On the other hand, there is a relatively high probability that the client device 201 determines that the structured data 620 corresponding to normal communication is normal. In other words, it is considered that the structured data corresponding to the normal communication include a factor to be determined as normal.

Therefore, the attacker performs the attack communication, as the evasion attack, to the client device 201 so that a part of the structured data 620 corresponding to the normal communication is inserted into the structured data 610 corresponding to the attack communication. In other words, the attacker performs the attack communication to the client device 201 so that the client device 201 obtains structured data 630 as log data of the communication. As a result, the attacker expects that the client device 201 wrongly determines that the structured data 630 of the attack communication is normal.

Therefore, the structured data 630 created by the evasion attack has, for example, a property that the structured data 630 easily includes data indicating certain processing in an overlapped manner. For example, the structured data 630 has a property that the structured data 630 easily includes a plurality of pieces of data having the same attribute value in an overlapped manner. Furthermore, for example, the structured data 630 has a property that the structured data 630 easily includes a plurality of pieces of data having the same combination of the plurality of attribute values in an overlapped manner.

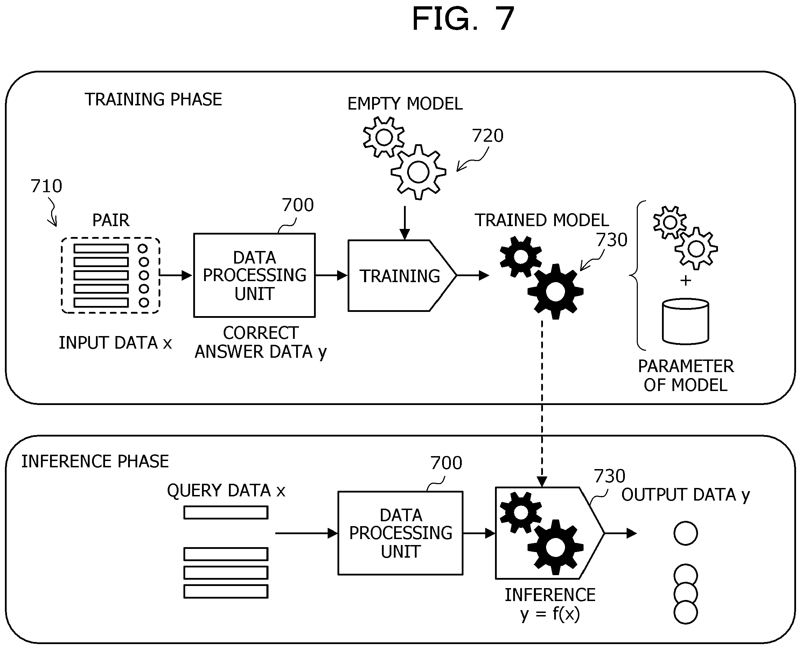

Here, the information processing device 100 processes the acquired structured data in consideration of the properties described above, treats the processed structured data as training data, and learns a model so as to improve the probability that the model correctly determines that invalid query data is abnormal. Furthermore, the information processing device 100 processes the acquired query data in consideration of the properties described above and inputs the processed query data into the learned model so as to accurately determine whether or not the query data is normal. Next, shifting to the description of FIG. 7, an example in which the information processing device 100 learns and uses a model will be described.

FIG. 7 is an explanatory diagram illustrating an example in which a model is learned and used. In FIG. 7, (7-1) the information processing device 100 acquires a pair group 710. The pair group 710 includes, for example, one or more pairs formed by structured data to be input data x and correct answer data y. The correct answer data y indicates a correct answer of data output from the model in response to an input of the input data x.

(7-2) The information processing device 100 processes the structured data to be the input data x by a data processing unit 700 and treats the processed data as training data. The data processing unit 700 corresponds to the processing unit 402. For example, the information processing device 100 specifies the number of pieces of data having the same content in the structured data. For example, if the specified number is larger than a predetermined number, the information processing device 100 processes the structured data by deleting the data from the structured data so that the number of pieces of data having the same content in the structured data becomes equal to the predetermined number. Specifically, for example, the information processing device 100 processes the structured data as described later with reference to FIGs. 9 to 13. The training data is associated with the correct answer data y corresponding to the structured data to be the base of the training data.

(7-3) The information processing device 100 includes an empty model 720. Then, the information processing device 100 learns a model 730 on the basis of the training data and the correct answer data y corresponding to the training data. For example, the information processing device 100 inputs each piece of the training data to the model 720 and adjusts a parameter of the model 720 so that data output from the model 720 in response to the input becomes the correct answer data y. As a result, the information processing device 100 can obtain the model 730 that can accurately determine whether or not the query data is normal.

(7-4) The information processing device 100 receives one or more pieces of query data x. The query data x is structured data. The information processing device 100 processes the query data x by the data processing unit 700. For example, the information processing device 100 specifies the number of pieces of data having the same content in the query data x. For example, if the specified number is larger than the predetermined number, the information processing device 100 processes the query data x by deleting the data from the query data x so that the number of pieces of data having the same content in the query data x becomes equal to the predetermined number. Specifically, for example, the information processing device 100 processes the query data x as described with reference to FIGs. 9 to 13 later.

(7-5) The information processing device 100 determines whether or not the query data x is normal on the basis of the processed query data x using the model 730. For example, the information processing device 100 inputs the processed query data x into the model 730 and acquires the output data y output from the model 730 in response to the input. The output data y is, for example, the attack certainty. Then, for example, the information processing device 100 determines whether or not the query data x is normal on the basis of the output data y. As a result, the information processing device 100 can accurately determine whether or not the query data x is normal.

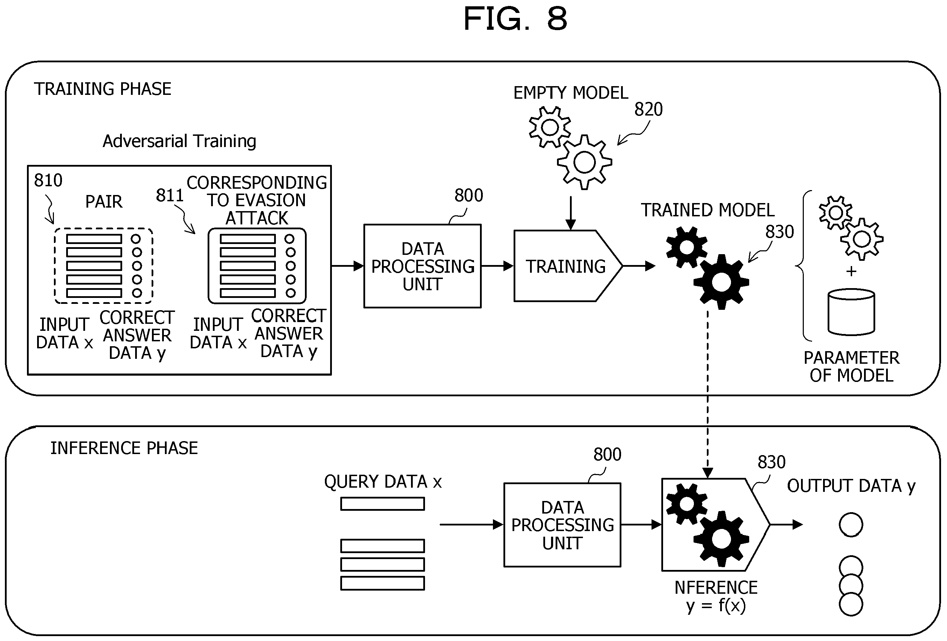

Next, shifting to the description of FIG. 8, another example in which the information processing device 100 learns and uses a model will be described. In the example in FIG. 8, the information processing device 100 copes with a case where structured data to be the input data x is processed to be in a state where the evasion attack is performed and the number of pieces of structured data to be the base of the training data is increased.

FIG. 8 is an explanatory diagram illustrating another example of learning and using a model. In FIG. 8, (8-1) the information processing device 100 acquires a pair group 810. The pair group 810 includes, for example, one or more pairs of the structured data to be the input data x and the correct answer data y. The correct answer data y indicates a correct answer of data output from the model in response to an input of the input data x.

(8-2) The information processing device 100 generates structured data corresponding to a case where an evasion attack is performed as new input data x by inserting data included in normal structured data into the structured data to be the input data x. The information processing device 100 associates the new input data x with the correct answer data y, generates a pair of the new input data x and the correct answer data y, and generates a new pair group 811. The correct answer data y indicates, for example, an abnormality. Specifically, for example, the information processing device 100 generates the pair of the new input data x and the correct answer data y according to Adversarial Training and generates the new pair group 811. As a result, the information processing device 100 can increase the number of useful pieces of training data.

(8-3) The information processing device 100 processes the structured data to be the input data x by a data processing unit 800 and treats the processed data as training data. The data processing unit 800 corresponds to the processing unit 402. A target to be processed is the generated new input data x and the input data x that is the source of generating the new input data x. For example, the information processing device 100 specifies the number of pieces of data having the same content in the structured data. For example, if the specified number is larger than a predetermined number, the information processing device 100 processes the structured data by deleting the data from the structured data so that the number of pieces of data having the same content in the structured data becomes equal to the predetermined number. Specifically, for example, the information processing device 100 processes the structured data as described later with reference to FIGs. 9 to 13. The training data is associated with the correct answer data y corresponding to the structured data to be the base of the training data.

(8-4) The information processing device 100 includes an empty model 820. Then, the information processing device 100 learns a model 830 on the basis of the training data and the correct answer data y corresponding to the training data. For example, the information processing device 100 inputs each piece of the training data to the model 820 and adjusts a parameter of the model 820 so that data output from the model 820 in response to the input becomes the correct answer data y. As a result, the information processing device 100 can obtain the model 830 that can accurately determine whether or not the query data is normal. Furthermore, because the information processing device 100 increases the number of pieces of useful training data and learns the model 830, the model 830 can improve accuracy of determining whether or not query data is normal.

(8-5) The information processing device 100 receives one or more pieces of query data x. The query data x is structured data. The information processing device 100 processes the query data x by the data processing unit 800. For example, the information processing device 100 specifies the number of pieces of data having the same content in the query data x. For example, if the specified number is larger than the predetermined number, the information processing device 100 processes the query data x by deleting the data from the query data x so that the number of pieces of data having the same content in the query data x becomes equal to the predetermined number. Specifically, for example, the information processing device 100 processes the query data x as described with reference to FIGs. 9 to 13 later.

(8-6) The information processing device 100 determines whether or not the query data x is normal on the basis of the processed query data x using the model 830. For example, the information processing device 100 inputs the processed query data x into the model 830 and acquires the output data y output from the model 830 in response to the input. The output data y is, for example, the attack certainty. Then, for example, the information processing device 100 determines whether or not the query data x is normal on the basis of the output data y. As a result, the information processing device 100 can accurately determine whether or not the query data x is normal.

### (Specific Example in Which Structured Data Is Processed)

Next, a specific example in which the information processing device 100 processes the structured data will be described with reference to FIGs. 9 to 13. Specifically, for example, first, a first specific example in which the information processing device 100 processes the structured data will be described with reference to FIG. 9. The first specific example is a specific example in which the information processing device 100 processes the structured data in a case where the structured data includes a plurality of pieces of data indicating the value of one attribute.

FIG. 9 is an explanatory diagram illustrating a first specific example for processing structured data 900. In FIG. 9, the information processing device 100 generates processed structured data 910 by processing the structured data 900.

In the example in FIG. 9, the information processing device 100 processes the structured data 900 by reducing M pieces of data having the same attribute value in the structured data 900 to N pieces of data. Here, M > N is satisfied. Furthermore, N = 1 is satisfied.

Specifically, for example, because the structured data 900 includes three pieces of data indicating a value A of the attribute Command, the information processing device 100 deletes two pieces of the data indicating the value A of the attribute Command from the structured data 900. The data to be deleted is selected, for example, in an order from the side closest to the end of the structured data 900.

Furthermore, specifically, for example, because the structured data 900 includes three pieces of data indicating a value B of the attribute Command, the information processing device 100 deletes two pieces of the data indicating the value B of the attribute Command from the structured data 900. The data to be deleted is selected, for example, in an order from the side closest to the end of the structured data 900.

Furthermore, specifically, for example, because the structured data 900 includes two pieces of data indicating a value C of the attribute Command, the information processing device 100 deletes one piece of the data indicating the value C of the attribute Command from the structured data 900. The data to be deleted is selected, for example, in an order from the side closest to the end of the structured data 900.

Furthermore, specifically, for example, because the structured data 900 includes two pieces of data indicating a value D of the attribute Command, the information processing device 100 deletes one piece of the data indicating the value D of the attribute Command from the structured data 900. The data to be deleted is selected, for example, in an order from the side closest to the end of the structured data 900.

As a result, the information processing device 100 can obtain the processed structured data 910 to be training data that makes it possible to learn the model that accurately determines whether or not query data is normal. The information processing device 100 can appropriately process the structured data 900, for example, according to the feature of the structured data 900 and can obtain the processed structured data 910 to be the training data.

Here, a case has been described where the information processing device 100 reduces the number of pieces of data indicating the attribute value to N = 1 regardless of the feature of the attribute value. However, the embodiment is not limited to this. For example, there may be a case where the information processing device 100 sets N to be variable depending on the feature of the attribute value.

Specifically, for example, a case is considered where the number of pieces of data indicating a first value of a certain attribute in the structured data 900 is useful information from the viewpoint of determining whether or not the structured data 900 is normal. In this case, the information processing device 100 may, for example, set N to be a relatively large value regarding the data indicating the first value. Furthermore, in this case, it is possible for the information processing device 100 not to reduce the number of pieces of data, for example, from the data indicating the first value.

More specifically, for example, a case is considered where the number of times when the processing of the command A is executed at the time of communication is useful information from the viewpoint of determining whether or not the structured data 900 is normal. In other words, a case is considered where the number of pieces of data indicating the value A of the attribute Command in the structured data 900 is useful information from the viewpoint of determining whether or not the structured data 900 is normal. In this case, specifically, for example, the information processing device 100 sets N = 3 with respect to the value A of the attribute Command and processes the structured data 900 so that the number of pieces of data indicating the value A of the attribute Command in the structured data 900 is equal to or less than N = 3.

Specifically, for example, a case is considered where the number of pieces of data indicating a second value of a certain attribute in the structured data 900 is not useful information from the viewpoint of determining whether or not the structured data 900 is normal. In this case, the information processing device 100 may, for example, set N to be a relatively small value regarding the data indicating the second value.

More specifically, for example, a case is considered where the number of times when the processing of the command B is executed at the time of communication is not useful information from the viewpoint of determining whether or not the structured data 900 is normal. In other words, a case is considered where the number of pieces of data indicating the value B of the attribute Command in the structured data 900 is not useful information from the viewpoint of determining whether or not the structured data 900 is normal. In this case, specifically, for example, the information processing device 100 sets N = 1 with respect to the value B of the attribute Command and processes the structured data 900 so that the number of pieces of data indicating the value B of the attribute Command in the structured data 900 is N = 1.

Next, a second specific example in which the information processing device 100 processes the structured data will be described with reference to FIG. 10. The second specific example is different from the first specific example and is a specific example in which the information processing device 100 processes the structured data in a case where the structured data includes a plurality of pieces of data indicating a combination of a plurality of attribute values.

FIG. 10 is an explanatory diagram illustrating the second specific example for processing structured data 1000. In FIG. 10, the information processing device 100 generates processed structured data 1010 by processing the structured data 1000.

In the example in FIG. 10, the information processing device 100 processes the structured data 1000 by reducing M pieces of data having the same combination of a plurality of attribute values in the structured data 1000 to N pieces of data. Here, M > N is satisfied. Furthermore, N = 1 is satisfied.

Specifically, for example, because the structured data 1000 includes two pieces of data indicating a combination of a value A of the attribute Command and a value a of the attribute Option, the information processing device 100 deletes one piece of the data indicating the combination from the structured data 1000. The data to be deleted is selected, for example, in an order from the side closest to the end of the structured data 1000.

Here, when deleting the data of the combination, the information processing device 100 does not delete and leaves data indicating a combination of the value A of the attribute Command and a value b of the attribute Option that is only partially the same as the combination.

Furthermore, specifically, for example, because the structured data 1000 includes only one piece of data indicating the combination of the value A of the attribute Command and the value b of the attribute Option, the information processing device 100 does not delete the data indicating the combination from the structured data 1000 and leaves the data.

Furthermore, specifically, for example, because the structured data 1000 includes three pieces of data indicating a combination of the value B of the attribute Command and a value c of the attribute Option, the information processing device 100 deletes two pieces of the data indicating the combination from the structured data 1000. The data to be deleted is selected, for example, in an order from the side closest to the end of the structured data 1000.

Furthermore, specifically, for example, because the structured data 1000 includes two pieces of data indicating a combination of a value C of the attribute Command and a value d of the attribute Option, the information processing device 100 deletes one piece of the data indicating the combination from the structured data 1000. The data to be deleted is selected, for example, in an order from the side closest to the end of the structured data 1000.

Furthermore, specifically, for example, because the structured data 1000 includes only one piece of data indicating a combination of a value D of the attribute Command and a value e of the attribute Option, the information processing device 100 does not delete the data indicating the combination from the structured data 1000 and leaves the data.

Furthermore, specifically, for example, because the structured data 1000 includes only one piece of data indicating a combination of the value D of the attribute Command and a value f of the attribute Option, the information processing device 100 does not delete the data indicating the combination from the structured data 1000 and leaves the data.

As a result, the information processing device 100 can obtain the processed structured data 1010 to be training data that makes it possible to learn the model that accurately determines whether or not query data is normal. The information processing device 100 can appropriately process the structured data 1000, for example, according to the feature of the structured data 1000 and can obtain the processed structured data 1010 to be the training data.

Here, a case has been described where the information processing device 100 reduces the data indicating the combination of the plurality of attribute values to N = 1 regardless of the feature of the combination of the plurality of attribute values. However, the embodiment is not limited to this. For example, there may be a case where the information processing device 100 sets N to be variable depending on the feature of the combination of the plurality of attribute values.

Specifically, a case is considered where the number of pieces of data indicating a first combination of attributes in the structured data 1000 is useful information from the viewpoint of determining whether or not the structured data 1000 is normal. In this case, the information processing device 100 may, for example, set N to be a relatively large value regarding the data indicating the first combination. Furthermore, in this case, it is possible for the information processing device 100 not to reduce the number of pieces of data, for example, from the data indicating the first combination.

More specifically, for example, a case is considered where the number of times when the processing in an option a of the command A is executed at the time of communication is useful information from the viewpoint of determining whether or not the structured data 1000 is normal. In other words, a case is considered where the number of pieces of data indicating the combination of the value A of the attribute Command and the value a of the attribute Option in the structured data 1000 is useful information from the viewpoint of determining whether or not the structured data 1000 is normal. In this case, specifically, for example, the information processing device 100 sets N = 3 with respect to the combination and processes the structured data 1000 so that the number of pieces of data indicating the combination in the structured data 1000 is equal to or less than N = 3.

Specifically, for example, a case is considered where the number of pieces of data indicating a second combination of attributes in the structured data 1000 is not useful information from the viewpoint of determining whether or not the structured data 1000 is normal. In this case, the information processing device 100 may, for example, set N to be a relatively small value regarding the data indicating the second combination.

More specifically, for example, a case is considered where the number of times when the processing in an option c of the command B is executed at the time of communication is not useful information from the viewpoint of determining whether or not the structured data 1000 is normal. In other words, a case is considered where the number of pieces of data indicating the combination of the value B of the attribute Command and the value c of the attribute Option in the structured data 1000 is not useful information from the viewpoint of determining whether or not the structured data 1000 is normal. In this case, specifically, for example, the information processing device 100 sets N = 1 with respect to the combination and processes the structured data 1000 so that the number of pieces of data indicating the combination in the structured data 1000 is N = 1.

Next, a third specific example in which the information processing device 100 processes the structured data will be described with reference to FIG. 11. The third specific example is different from the first specific example and is a specific example in which the information processing device 100 processes the structured data in a case where the structured data includes a plurality of pieces of data indicating a combination of a plurality of attribute values.

FIG. 11 is an explanatory diagram illustrating the third specific example for processing structured data 1100. In FIG. 11, the information processing device 100 generates processed structured data 1110 by processing the structured data 1100.

In the example in FIG. 11, the information processing device 100 processes the structured data 1100 by reducing M pieces of data having the same combination of a plurality of attribute values in the structured data 1100 to N pieces of data. Here, M > N is satisfied. Furthermore, N = 1 is satisfied.

Furthermore, in the example in FIG. 11, the information processing device 100 processes the structured data 1100 by reducing M pieces of data having the same first value of the first attribute among the plurality of attributes in the structured data 1100 to N pieces of data. Here, M > N is satisfied. Furthermore, N = 1 is satisfied.

For example, the first attribute and the first value are set on the basis of a feature of each of the plurality of attributes and a feature of each of the plurality of values that may be set to each of the plurality of attributes. Specifically, for example, a case is considered where the number of pieces of data indicating the value A of the attribute Command in the structured data 1100 has a feature that easily increases due to an evasion attack regardless of the values a and b of the attribute Option. In this case, the attribute Command may be the first attribute. Furthermore, the value A may be the first value.

Furthermore, specifically, for example, a case is considered where the number of pieces of data indicating the value D of the attribute Command in the structured data 1100 cannot be information indicating the feature at the time when the evasion attack is performed if the values e and f of the attribute Option are not considered. In this case, the value D of the attribute Command cannot be the first value. In the example in FIG. 11, the first attribute is the attribute Command. The first value is the value A. Furthermore, a plurality of first attributes may be set. A plurality of first values may be set.

Specifically, for example, because the structured data 1100 includes three pieces of data indicating the value A of the attribute Command regardless of the values a and b of the attribute Option, the information processing device 100 deletes two pieces of the data indicating the value A of the attribute Command from the structured data 1100. The data to be deleted is selected, for example, in an order from the side closest to the end of the structured data 1100.

Furthermore, specifically, for example, because the structured data 1100 includes three pieces of data indicating the combination of the value B of the attribute Command and the value c of the attribute Option, the information processing device 100 deletes two pieces of the data indicating the combination from the structured data 1100. The data to be deleted is selected, for example, in an order from the side closest to the end of the structured data 1100.

Furthermore, specifically, for example, because the structured data 1100 includes two pieces of data indicating the combination of the value C of the attribute Command and the value d of the attribute Option, the information processing device 100 deletes one piece of the data indicating the combination from the structured data 1100. The data to be deleted is selected, for example, in an order from the side closest to the end of the structured data 1100.

Furthermore, specifically, for example, because the structured data 1100 includes only one piece of data indicating a combination of the value D of the attribute Command and the value e of the attribute Option, the information processing device 100 does not delete the data indicating the combination from the structured data 1100 and leaves the data. Here, if the values e and f of the attribute Option are not considered, the number of pieces of the data indicating the value D of the attribute Command in the structured data 1100 is two. However, because it is preferable to consider the values e and f of the attribute Option, the information processing device 100 does not delete and leaves the data indicating the combination of the value D of the attribute Command and the value e of the attribute Option.

Furthermore, specifically, for example, because the structured data 1100 includes only one piece of data indicating a combination of the value D of the attribute Command and the value f of the attribute Option, the information processing device 100 does not delete the data indicating the combination from the structured data 1100 and leaves the data. Here, if the values e and f of the attribute Option are not considered, the number of pieces of the data indicating the value D of the attribute Command in the structured data 1100 is two. However, because it is preferable to consider the values e and f of the attribute Option, the information processing device 100 does not delete and leaves the data indicating the combination of the value D of the attribute Command and the value f of the attribute Option.

As a result, the information processing device 100 can obtain the processed structured data 1110 to be training data that makes it possible to learn the model that accurately determines whether or not query data is normal. The information processing device 100 can appropriately process the structured data 1100, for example, according to the feature of the structured data 1100 and can obtain the processed structured data 1110 to be the training data.

Here, a case has been described where the information processing device 100 reduces the number of pieces of data indicating the value of the first attribute to N = 1 regardless of the feature of the value of the first attribute. However, the embodiment is not limited to this. For example, there may be a case where the information processing device 100 sets N to be variable depending on the feature of the value of the first attribute. Here, a case has been described where the information processing device 100 reduces the data indicating the combination of the plurality of attribute values to N = 1 regardless of the feature of the combination of the plurality of attribute values. However, the embodiment is not limited to this. For example, there may be a case where the information processing device 100 sets N to be variable depending on the feature of the combination of the plurality of attribute values.

Next, a fourth specific example in which the information processing device 100 processes the structured data will be described with reference to FIG. 12. The fourth specific example is different from the first specific example and is a specific example in which the information processing device 100 processes the structured data in a case where the structured data includes a plurality of pieces of data indicating a combination of a plurality of attribute values.

FIG. 12 is an explanatory diagram illustrating the fourth specific example for processing structured data 1200. In FIG. 12, the information processing device 100 generates processed structured data 1210 by processing the structured data 1200.

Here, for example, a case is considered where an evasion attack makes consecutive appearances of data having the same combination of the plurality of attribute values in the structured data 1200 be likely to increase. Therefore, in the example in FIG. 12, the information processing device 100 processes the structured data 1200 by reducing M consecutive pieces of data having the same combination of the plurality of attribute values in the structured data 1200 to N pieces of data. Here, M > N is satisfied. Furthermore, N = 1 is satisfied.

Specifically, for example, because the structured data 1200 includes two consecutive pieces of data indicating a combination of the value A of the attribute Command and the value a of the attribute Option, the information processing device 100 deletes one piece of the data indicating the combination from the structured data 1200. The data to be deleted is selected, for example, in an order from the side closest to the end of the structured data 1200 in the consecutive data.

Here, when deleting the data of the combination, the information processing device 100 does not delete and leaves data indicating a combination of the value A of the attribute Command and a value b of the attribute Option that is only partially the same as the combination.

Furthermore, specifically, for example, because the structured data 1200 includes only one piece of data indicating the combination of the value A of the attribute Command and the value b of the attribute Option, the information processing device 100 does not delete the data indicating the combination from the structured data 1200 and leaves the data.

Furthermore, specifically, for example, because the structured data 1200 includes two consecutive pieces of data indicating the combination of the value B of the attribute Command and the value c of the attribute Option, the information processing device 100 deletes one piece of the data indicating the combination from the structured data 1200. The data to be deleted is selected, for example, in an order from the side closest to the end of the structured data 1200 in the consecutive data.

Furthermore, specifically, for example, because the structured data 1200 includes two consecutive pieces of data indicating the combination of the value C of the attribute Command and the value d of the attribute Option, the information processing device 100 deletes one piece of the data indicating the combination from the structured data 1200. The data to be deleted is selected, for example, in an order from the side closest to the end of the structured data 1200 in the consecutive data.

Furthermore, specifically, for example, because the structured data 1200 includes only one piece of non-consecutive data indicating the combination of the value B of the attribute Command and the value c of the attribute Option, the information processing device 100 does not delete the data indicating the combination from the structured data 1200.

Furthermore, specifically, for example, because the structured data 1200 includes only one piece of non-consecutive data indicating the combination of the value D of the attribute Command and the value e of the attribute Option, the information processing device 100 does not delete the data indicating the combination from the structured data 1200.

Furthermore, specifically, for example, because the structured data 1200 includes only one piece of non-consecutive data indicating the combination of the value D of the attribute Command and the value f of the attribute Option, the information processing device 100 does not delete the data indicating the combination from the structured data 1200.

As a result, the information processing device 100 can obtain the processed structured data 1210 to be training data that makes it possible to learn the model that accurately determines whether or not query data is normal. The information processing device 100 can appropriately process the structured data 1200, for example, according to the feature of the structured data 1200 and can obtain the processed structured data 1210 to be the training data.

Here, a case has been described where the information processing device 100 reduces the M consecutive pieces of data indicating the combination of the plurality of attribute values to N = 1 regardless of the feature of the combination of the plurality of attribute values. However, the embodiment is not limited to this. For example, there may be a case where the information processing device 100 sets N to be variable depending on the feature of the combination of the plurality of attribute values.

Next, a fifth specific example in which the information processing device 100 processes the structured data will be described with reference to FIG. 13. The fifth specific example is different from the first specific example and is a specific example in which the information processing device 100 processes the structured data in a case where the structured data includes a plurality of pieces of data indicating a combination of a plurality of attribute values.

FIG. 13 is an explanatory diagram illustrating the fifth specific example for processing structured data 1300. In FIG. 13, the information processing device 100 generates processed structured data 1310 by processing the structured data 1300.

Here, for example, a case is considered where an evasion attack makes consecutive appearances of data having the same combination of the plurality of attribute values in the structured data 1300 be likely to increase. Therefore, in the example in FIG. 13, the information processing device 100 processes the structured data 1300 by reducing M consecutive pieces of data having the same combination of the plurality of attribute values in the structured data 1300 to N pieces of data. Here, M > N is satisfied. Furthermore, N = 1 is satisfied.

Furthermore, for example, a case is considered where an evasion attack makes consecutive appearances of data indicating the first value of the first attribute of the plurality of attributes in the structured data 1300 be likely to increase. Therefore, in the example in FIG. 13, the information processing device 100 processes the structured data 1300 by reducing M consecutive pieces of data having the same first value of the first attribute among the plurality of attributes in the structured data 1300 to N pieces of data. Here, M > N is satisfied. Furthermore, N = 1 is satisfied.

For example, the first attribute and the first value are set on the basis of a feature of each of the plurality of attributes and a feature of each of the plurality of values that may be set to each of the plurality of attributes. Specifically, for example, a case is considered where the number of pieces of data indicating the value A of the attribute Command in the structured data 1300 has a feature that easily increases due to an evasion attack regardless of the values a and b of the attribute Option. In this case, the attribute Command may be the first attribute. Furthermore, the value A may be the first value.

Furthermore, specifically, for example, a case is considered where the number of pieces of data indicating the value D of the attribute Command in the structured data 1300 is not useful information from the viewpoint of determining whether or not the structured data 1300 is normal if the values e and f of the attribute Option are not considered. In this case, the value D of the attribute Command cannot be the first value. In the example in FIG. 13, the first attribute is the attribute Command. The first value is the value A. Furthermore, a plurality of first attributes may be set. A plurality of first values may be set.

Specifically, for example, because the structured data 1300 includes three consecutive pieces of data indicating the value A of the attribute Command regardless of the values a and b of the attribute Option, the information processing device 100 deletes two pieces of the data indicating the value A of the attribute Command from the structured data 1300. The data to be deleted is selected, for example, in an order from the side closest to the end of the structured data 1300 in the consecutive data.

Furthermore, specifically, for example, because the structured data 1300 includes two consecutive pieces of data indicating the combination of the value B of the attribute Command and the value c of the attribute Option, the information processing device 100 deletes one piece of the data indicating the combination from the structured data 1300. The data to be deleted is selected, for example, in an order from the side closest to the end of the structured data 1300 in the consecutive data.

Furthermore, specifically, for example, because the structured data 1300 includes two consecutive pieces of data indicating the combination of the value C of the attribute Command and the value d of the attribute Option, the information processing device 100 deletes one piece of the data indicating the combination from the structured data 1300. The data to be deleted is selected, for example, in an order from the side closest to the end of the structured data 1300 in the consecutive data.

Furthermore, specifically, for example, because the structured data 1300 includes only one piece of non-consecutive data indicating the combination of the value B of the attribute Command and the value c of the attribute Option, the information processing device 100 does not delete the data indicating the combination from the structured data 1300.

Furthermore, specifically, for example, because the structured data 1300 includes only one piece of non-consecutive data indicating the combination of the value D of the attribute Command and the value e of the attribute Option, the information processing device 100 does not delete the data indicating the combination from the structured data 1300. Here, if the values e and f of the attribute Option are not considered, the number of consecutive pieces of data indicating the value D of the attribute Command in the structured data 1300 is two. However, because it is preferable to consider the values e and f of the attribute Option, the information processing device 100 does not delete the data indicating the combination of the value D of the attribute Command and the value e of the attribute Option.

Furthermore, specifically, for example, because the structured data 1300 includes only one piece of non-consecutive data indicating the combination of the value D of the attribute Command and the value f of the attribute Option, the information processing device 100 does not delete the data indicating the combination from the structured data 1300. Here, if the values e and f of the attribute Option are not considered, the number of consecutive pieces of data indicating the value D of the attribute Command in the structured data 1300 is two. However, because it is preferable to consider the values e and f of the attribute Option, the information processing device 100 does not delete the data indicating the combination of the value D of the attribute Command and the value f of the attribute Option.

As a result, the information processing device 100 can obtain the processed structured data 1310 to be training data that makes it possible to learn the model that accurately determines whether or not query data is normal. The information processing device 100 can appropriately process the structured data 1300, for example, according to the feature of the structured data 1300 and can obtain the processed structured data 1310 to be the training data.

Here, a case has been described where the information processing device 100 reduces the number of pieces of data indicating the value of the first attribute to N = 1 regardless of the feature of the value of the first attribute. However, the embodiment is not limited to this. For example, there may be a case where the information processing device 100 sets N to be variable depending on the feature of the value of the first attribute. Here, a case has been described where the information processing device 100 reduces the data indicating the combination of the plurality of attribute values to N = 1 regardless of the feature of the combination of the plurality of attribute values. However, the embodiment is not limited to this. For example, there may be a case where the information processing device 100 sets N to be variable depending on the feature of the combination of the plurality of attribute values.

There may be a case where the information processing device 100 processes the structured data and generates the training data by combining two or more specific examples of the first specific example, the second specific example, the third specific example, the fourth specific example, and the fifth specific example described above.

### (Example of Effect of Information Processing Device 100)

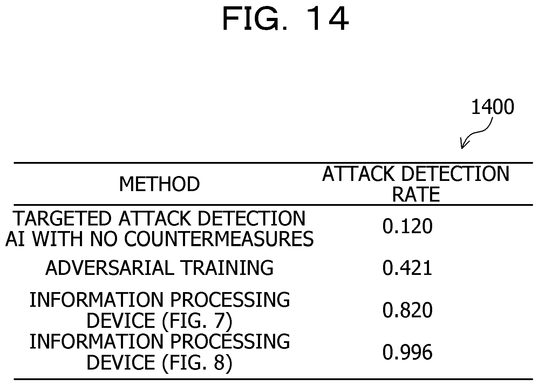

Next, an example of an effect of the information processing device 100 will be described with reference to FIG. 14.

FIG. 14 is an explanatory diagram illustrating an example of the effect of the information processing device 100. As illustrated in Table 1400 in FIG. 14, the typical targeted attack detection artificial intelligence (AI) for which countermeasures against evasion attacks are not implemented has a relatively low attack resistance and has an attack detection rate of 0.120. The attack detection rate represents a rate of query data, of query data created by an evasion attack, that is correctly determined as abnormal and is zero to one. As the attack detection rate is closer to one, this indicates that the attack resistance is higher. Furthermore, as illustrated in Table 1400 in FIG. 14, the typical targeted attack detection AI using Adversarial Training has a relatively low attack resistance and has an attack detection rate of 0.421.

On the other hand, if the information processing device 100 learns and uses a model as illustrated in FIG. 7, the information processing device 100 can increase the attack detection rate to 0.820. Furthermore, if the information processing device 100 learns and uses a model as illustrated in FIG. 8, the information processing device 100 can increase the attack detection rate to 0.996. In this way, the information processing device 100 can increase the attack detection rate.

For example, by deleting a factor, considered to deteriorate the attack detection rate, that is assumed to be inserted into the structured data by the evasion attack from the structured data, the information processing device 100 can generate training data and learn a model. Furthermore, for example, the information processing device 100 can delete the factor, considered to deteriorate the attack detection rate, that is assumed to be inserted into the query data by the evasion attack, from the query data. From these, the information processing device 100 can prevent the deterioration in the attack detection rate.

Specifically, for example, in the communication field, it is considered that determination regarding normal communication is triggered by data indicating processing that contributes to normal determination. In other words, for each processing, there are a positive contribution rate and a negative contribution rate with respect to the determination regarding the normal communication. Here, in a case where data indicating processing having a relatively large positive contribution rate is added to the structured data by the evasion attack, even if the number of added pieces of data is relatively small, it is considered that wrong determination regarding the normal communication is triggered. On the other hand, in a case where data indicating processing having a relatively small positive contribution rate is added to the structured data by the evasion attack, if the number of added pieces of data is relatively small, it is considered that wrong determination regarding normal communication is less likely to be triggered. Then, it is considered that the wrong determination regarding the normal communication is likely to be triggered as the number of added data is larger. On the other hand, the information processing device 100 can delete overlapped data from the structured data and can prevent to trigger the wrong determination regarding the normal communication.

Here, a case has been described where the structured data includes one or more pieces of data indicating a combination of one or more attribute values regarding communication. However, the embodiment is not limited to this. For example, there may be a case where the structured data includes one or more pieces of data indicating a combination of one or more attribute values regarding a mail. In this case, the attribute is, for example, a sender, an address, a header, or the like of the mail. Furthermore, for example, there may be a case where the structured data includes one or more pieces of data indicating a combination of one or more attribute values regarding software. In this case, the attribute is, for example, information regarding a feature of a PE file of the software.

### (Processing Procedure)

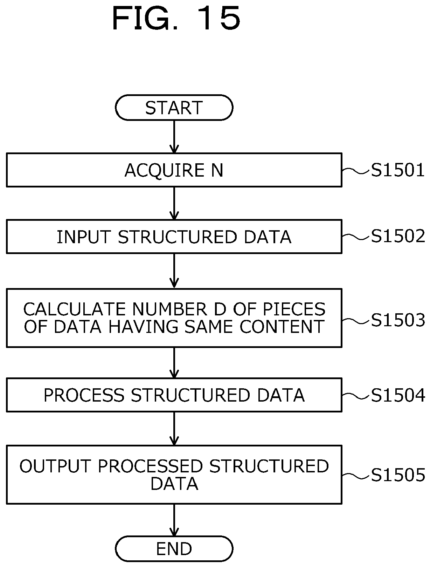

Next, an example of a processing procedure executed by the information processing device 100 will be described with reference to FIG. 15. The processing is, for example, implemented by the CPU 301, the storage area including the memory 302, the recording medium 305, or the like, and the network I/F 303 illustrated in FIG. 3.

FIG. 15 is a flowchart illustrating an example of a processing procedure. In FIG. 15, the information processing device 100 acquires N (step S1501).

Next, the information processing device 100 receives an input of structured data (step S1502). The structured data is, for example, the base of training data. The structured data may be, for example, query data. Then, the information processing device 100 calculates the number D of pieces of data having the same content in the structured data (step S1503).

Next, if there is D larger than N, the information processing device 100 processes the structured data so that the D pieces of data having the same content in the structured data is reduced to N pieces of data (step S1504). Then, the information processing device 100 outputs the processed structured data (step S1505). Thereafter, the information processing device 100 ends the processing procedure.

As a result, the information processing device 100 can process the structured data to be the base of training data and can obtain training data used to learn a model that can correctly determine that invalid query data is abnormal. Furthermore, the information processing device 100 can process the structured data to be query data and can input the processed structured data into the model.

As described above, according to the information processing device 100, structured data including a plurality of pieces of data indicating a value of a certain attribute can be acquired. According to the information processing device 100, if the number of pieces of data having the same attribute value in the acquired structured data is larger than a predetermined number, it is possible to generate training data by processing the structured data so that the number of pieces of data having the same attribute value becomes equal to the predetermined number. As a result, the information processing device 100 can obtain the training data that makes it possible to learn the model that can accurately detect invalid structured data.

According to the information processing device 100, the model can be learned using the generated training data. As a result, the information processing device 100 can learn the model that can accurately detect invalid structured data and can make the learned model be available.

According to the information processing device 100, query data including a plurality of pieces of data indicating an attribute value can be acquired. According to the information processing device 100, if the number of pieces of data having the same attribute value in the acquired query data is larger than a predetermined number, it is possible to process the query data so that the number of pieces of data having the same attribute value becomes equal to the predetermined number. According to the information processing device 100, it is possible to verify validity of the acquired query data on the basis of the processed query data using the learned model. As a result, the information processing device 100 can accurately detect invalid query data using the learned model.

According to the information processing device 100, the predetermined number can be set on the basis of the feature of the attribute value indicated by the data. As a result, the information processing device 100 can appropriately process the structured data according to the feature of the structured data and can obtain the training data that makes it possible to learn the model that can accurately determine that invalid query data is abnormal.

According to the information processing device 100, the predetermined number can be set in common to each value that may be set to the attribute indicated by the data. As a result, the information processing device 100 can make it easier to set the predetermined number and can reduce a workload of the user of the information processing device 100.

According to the information processing device 100, the structured data including the plurality of pieces of the data indicating the combination of the plurality of attribute values can be set as a processing target. According to the information processing device 100, if the number of pieces of data having the same combination in the structured data is larger than the predetermined number, the structured data can be processed so that the number of pieces of the data having the same combination becomes equal to the predetermined number. As a result, the information processing device 100 can appropriately process the structured data according to the feature of the structured data.

According to the information processing device 100, the structured data including the plurality of pieces of the data indicating the combination of the plurality of attribute values can be set as a processing target. According to the information processing device 100, if the number of pieces of data of which any one of the plurality of attribute values is the same in the structured data is larger than the predetermined number, the structured data can be processed so that the number of pieces of data having the same attribute value becomes equal to the predetermined number. As a result, the information processing device 100 can appropriately process the structured data according to the feature of the structured data.

According to the information processing device 100, the structured data including the plurality of pieces of the data indicating the combination of the plurality of attribute values can be set as a processing target. For example, according to the information processing device 100, if the number of continuously appearing pieces of the data having the same combination in the structured data is larger than the predetermined number, the structured data can be processed so that the number of continuously appearing pieces of the data having the same combination becomes equal to the predetermined number. As a result, the information processing device 100 can appropriately process the structured data according to the feature of the structured data.

According to the information processing device 100, the structured data including the plurality of pieces of the data indicating the combination of the plurality of attribute values can be set as a processing target. For example, according to the information processing device 100, if the number of continuously appearing pieces of the data of which any one of the attribute values is the same in the structured data is larger than the predetermined number, the structured data can be processed so that the number of continuously appearing pieces of the data having the same attribute value becomes equal to the predetermined number. As a result, the information processing device 100 can appropriately process the structured data according to the feature of the structured data.

According to the information processing device 100, by adding any piece of the data included in the normal second structured data that includes the plurality of pieces of the data indicating the attribute value to the first structured data including the plurality of pieces of the data indicating the attribute value, the first structured data to which the data has been added can be obtained. According to the information processing device 100, the training data can be generated by processing the first structured data to which the data has been added so that the pieces of the data having the same attribute value in the first structured data to which the data has been added becomes equal to the predetermined number. As a result, the information processing device 100 can increase the number of pieces of the training data and can make it easier to learn the model that can accurately determine that invalid query data is abnormal.

According to the information processing device 100, the number of pieces of the data having the same attribute value in the acquired structured data can be specified. According to the information processing device 100, if the specified number is larger than the predetermined number, the training data can be generated by deleting the data from the structured data so that the number of pieces of the data having the same attribute value becomes equal to the predetermined number. As a result, the information processing device 100 can determine whether or not to process the structured data and can generate the training data.

According to the information processing device 100, it is possible to set the structured data including the plurality of pieces of the data indicating a single processing related to communication as a processing target, and the command relating to the communication can be adopted as the attribute. As a result, the information processing device 100 can be applied to the communication field and can detect attack communication.

According to the information processing device 100, it is possible to set the structured data including the plurality of pieces of the data indicating a single processing relating to communication as a processing target, and the command and the option related to the communication can be adopted as the plurality of attributes. As a result, the information processing device 100 can be applied to the communication field and can detect attack communication.

Note that the information processing method described in the present embodiment may be implemented by executing a prepared program on a computer such as a personal computer (PC) or a workstation. The information processing program described in the present embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), or the like. Furthermore, the information processing program described in the present embodiment may be distributed via a network such as the Internet.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A non-transitory computer-readable recording medium storing an information processing program for causing a computer to execute processing comprising:
acquiring structured data that includes a plurality of pieces of data that indicates a value of a certain attribute; and
generating training data used when a model that detects invalid structured data is learned, when the number of pieces of data that has the same attribute value in the acquired structured data is larger than a predetermined number, by processing the structured data so that the number of pieces of data that has the same attribute value becomes equal to the predetermined number.

2. The non-transitory computer-readable recording medium storing the information processing program according to claim 1, for causing the computer to execute processing further comprising:
learning the model using the generated training data.

3. The non-transitory computer-readable recording medium storing the information processing program according to claim 2, for causing the computer to execute processing further comprising:
acquiring query data that includes a plurality of pieces of data that indicates the attribute value;
processing the query data so that the number of pieces of data that has the same attribute value becomes equal to the predetermined number when the number of pieces of data that has the same attribute value in the acquired query data is larger than the predetermined number; and
verifying validity of the acquired query data on the basis of the processed query data using the learned model.

4. The non-transitory computer-readable recording medium storing the information processing program according to any one of claims 1 to 3, wherein the predetermined number is set on the basis of a feature of the attribute value indicated by the data.

5. The non-transitory computer-readable recording medium storing the information processing program according to any one of claims 1 to 4, wherein the predetermined number is set in common for each of values that may be set to the attribute indicated by the data.

6. The non-transitory computer-readable recording medium storing the information processing program according to any one of claims 1 to 5, wherein
the structured data includes a plurality of pieces of data that indicates a combination of a plurality of attribute values, and
the generating processing
generates the training data, when the number of pieces of data that has the same combination in the acquired structured data is larger than the predetermined number, by processing the structured data so that the number of pieces of data that has the same combination becomes equal to the predetermined number.

7. The non-transitory computer-readable recording medium storing the information processing program according to any one of claims 1 to 6, wherein
the structured data includes a plurality of pieces of data that indicates a combination of a plurality of attribute values, and
the generating processing
generates the training data, when the number of pieces of data of which any one of the plurality of attribute values in the acquired structured data is the same is larger than the predetermined number, by processing the structured data so that the number of pieces of data of which any one of the plurality of attribute values is the same becomes equal to the predetermined number.

8. The non-transitory computer-readable recording medium storing the information processing program according to any one of claims 1 to 7, wherein
the structured data includes a plurality of pieces of data that indicates a combination of a plurality of attribute values, and
the generating processing
generates the training data, when the number of continuously appearing pieces of data that has the same combination in the acquired structured data is more than the predetermined number, by processing the structured data so that the number of continuously appearing pieces of data that has the same combination becomes equal to the predetermined number.

9. The non-transitory computer-readable recording medium storing the information processing program according to any one of claims 1 to 8, wherein
the structured data includes a plurality of pieces of data that indicate a combination of a plurality of attribute values, and
the generating processing
generates the training data, when the number of continuously appearing pieces of data of which any one of the plurality of attribute values is the same in the acquired structured data is more than the predetermined number, by processing the structured data so that the number of continuously appearing pieces of data of which any one of the plurality of attribute values is the same becomes equal to the predetermined number.

10. The non-transitory computer-readable recording medium storing the information processing program according to any one of claims 1 to 9, wherein
the acquiring processing,
by adding any piece of data included in normal second structured data that includes the plurality of pieces of data that indicates attribute values to first structured data that includes the plurality of pieces of data that indicates attribute values, acquires the added first structured data, and
the generating processing
generates the training data, when the number of pieces of data that has the same attribute value in the acquired added first structured data is larger than a predetermined number, by processing the added first structured data so that the number of pieces of data that has the same attribute value becomes equal to the predetermined number.

11. A computer-implemented method comprising:
acquiring structured data that includes a plurality of pieces of data that indicates a value of a certain attribute; and
generating training data used when a model that detects invalid structured data is learned, when the number of pieces of data that has the same attribute value in the acquired structured data is larger than a predetermined number, by processing the structured data so that the number of pieces of data that has the same attribute value becomes equal to the predetermined number.

12. An information processing device comprising:
a memory; and
a processor coupled to the memory, the processor being configured to perform processing, the processing including:
acquiring structured data that includes a plurality of pieces of data that indicates a value of a certain attribute; and
generating training data used when a model that detects invalid structured data is learned, when the number of pieces of data that has the same attribute value in the acquired structured data is larger than a predetermined number, by processing the structured data so that the number of pieces of data that has the same attribute value becomes equal to the predetermined number.
